# EUROPEAN PATENT APPLICATION

(11) **EP 1 554 939 A1**
(43) Date of publication of application: **20.07.2005**
(21) Application number: 03738638.0
(22) Date of filing: 02.07.2003
(51) Int. Cl.: A23L 1/212, A23L 1/105, A23L 1/31, A23L 1/314, A23L 1/216, A23L 1/217, A23L 1/00

(54) **METHOD OF MODIFYING FOOD MATERIAL**

(30) Priority: 08.07.2002 JP 2002199025; 30.05.2003 JP 2003155209
(71) Applicant: Ajinomoto Co., Inc., Tokyo 104-8315 (JP)
(72) Inventor: FUJISHIMA, Yoshiyuki, Ajinomoto Co., Inc., Kawasaki-shi, Kanagawa 210-8681 (JP); OKAMOTO, Takeshi, Ajinomoto Co., Inc., Kawasaki-shi, Kanagawa 210-8681 (JP); NIO, Noriki, Ajinomoto Co., Inc., Kawasaki-shi, Kanagawa 210-8681 (JP)
(74) Representative: Strehl Schübel-Hopf & Partner
(86) International application number: PCT/JP2003/008412
(87) International publication number: WO 2004/004489

(57) **Abstract**

A method for modifying a food material, which comprises immersing a food material in a solution containing an enzyme, carrying out pressure treatment at 1.04-50 atm or less for the enzyme to infiltrate into the food material, and causing an enzyme reaction to take place inside the food material.

## Description

### TECHNICAL FIELD

The present invention relates to a method for modifying a food material to obtain a food material with good appearance and texture that hardly becomes softened and disintegrated during boiling, and a food material with appropriate softness.

### BACKGROUND ART

Modifying food materials is extremely important in view of processability, preservability , texture and taste, and the like. Regarding processability, there are various needs such as shortening of the time required for cooking, obtaining physical properties that facilitate cutting and mixing processes, and reduced deterioration in physical characteristics during processing. Regarding preservability, there are needs such as prevention of oxidation decay and discoloration due to storage period, temperature, and the like, and prevention of deformation upon transport. Regarding texture and taste, there are also various needs for food materials, such as moderate resistance to teeth, proper crunchness, and *umami* (delicious taste) or kokumi(mouthfullness, continuity, thickness, mildness or punch) that spreads intraorally. Furthermore, regarding food materials, there are needs such as preventing changes in shape and taste due to physical treatment such as retort heating, freezing, and thawing.

There are many needs such as physico-chemical stability under the condition of normal or excessive treatment, and improvement of processability.

Techniques using enzymes for processing foods have existed from long ago. For example, production of cheese using the chymosin of cattle and production of *miso* (fermented soybean paste) and soy sauce using koji-derived proteinase are indispensable for the today's eating habits.

Recent examples of processing food materials include processing sugars using amylase, glucanase, xylanase, or the like and processing of fruits using pectinase.

Although enzymes are used for various types of food processing, currently enzymes are used mainly for processing slurry-formed materials or the surfaces of food materials. As a technique to infiltrate enzymes into food materials, long-time immersion in an enzyme solution or infiltration under reduced pressure has been examined. However, these techniques have low industrial productivity because of their time-consuming processes and the complicated procedure for reduced pressure condition. Thus the resulting effects have been unsatisfactory. Moreover, there is concern that the reduced pressure condition cause the outflow of nutrients existing inside the food materials. Thus, methods using reduced pressure are impractical.

An example of utilizing pectinesterase for fried potato includes US 2002/0004085. US 2002/0004085 discloses enzyme treatment wherein 400 g of Bintje potato with a 1 cm x 10 cm cross section that had been subjected to 10 minutes of blanch treatment at 75°C was immersed for 1 hour in 0.25 M calcium solution (1000 ml) with pectinesterase (5g). The treated potato was used to make fried potato. The surface of the treated potato was dried, and the potato was pre-fried at 190°C for 2 minutes, frozen, and then fried at 195°C for 5 minutes to give fried potato. The crispness of the treated fried potato was then evaluated by panels and 9 out of 13 panels chose the treated sample as being most crispy over an untreated control sample, while 4 out of 13 panels chose the control sample over the treated fried potato. Hence, it could not be said that the effect of modifying potato by the enzyme treatment method disclosed in US 2002/0004085 was sufficient.

There are some findings that enzymes react on foods under pressure. Examples of such findings include a saccharification method of starch using amylase under pressure (e.g., BE75872 (1971) Iuds du Mais, JP Patent Publication (Kokai) No. 62-118863 A (1987)) and a method for softening meat in which protease react on the meat at 100 atm or more (JP Patent Publication (Kokai) No. 5-7476 A (1993)). However, since these methods are carried out under conditions of high temperature and high pressure, there are problems such as complicated systems or procedures to carry out these methods and decomposition of target substances. There are no findings concerning the introduction of enzymes into food materials with moderate pressure in order to improve the delicate texture of foods or to obtain food materials characterized by having good digestability, being difficult to become softened and disintegrated during boiling, having strong *umami* or *kokumi* (mouthfulness, continuity, thickness, mildness or punch), having appropriate tenderness, or the like.

### SUMMARY OF THE INVENTION

The objective of the present invention is to provide a food material having improved appearance, texture, digestability, reduction of softening and disintegration during boiling, *umami* or *kokumi* (mouthfulness, continuity, thickness, mildness or punch), hardness, and the like, and a method for modifying a food material to produce such a food material.

As a result of intensive studies to solve the above problems, we have discovered that the above problems can be solved by carrying out pressure treatment at 50 atm or less for an intact food material or a food material cut into any size or shape in an enzyme solution in order to infiltrate the enzyme into the food material. We have thus completed the present invention.

The present invention comprises the following inventions.
(1) A method for modifying a food material, which comprises:
   contacting a solution containing an enzyme with a food material,
   infiltrating the enzyme into the food material by pressure treatment at 1.04-50 atm, and
   carrying out the enzyme reaction inside the food material.
(2) The method of (1) above, wherein the food material is selected from the group consisting of meat, fish and shellfish, cereals, vegetables, and fruits.
(3) The method of (1) above, wherein the enzyme is selected from the group consisting of protease, transglutaminase, lipase, glutaminase, amylase, glucanase, xylanase, laccase, phospholipase, pectinase, pectinesterase, and peptidase.
(4) The method of (1) above, wherein the pressure of the pressure treatment is 2-15 atm.
(5) The method of (1) above, wherein the food material is selected from the group consisting of potato, carrot, onion, radish, pumpkin, bell pepper, spinach, cabbage, sweet potato, asparagus, broccoli, cauliflower, bamboo shoot, and green soybean.
(6) The method of (1) above, wherein the food material is selected from the group consisting of strawberry, peach, mango, papaya, watermelon, melon, apple, pear, persimmon, and pineapple.
(7) The method of (1) above, wherein the enzyme is pectinesterase, the food material is a vegetable or a fruit, and the enzyme concentration as the protein amount of the enzyme in a solution containing the enzyme is 0.0005% to 0.03% by weight relative to the food material .
(8) The method of (1) above, wherein the enzyme is pectinesterase, the food material is a vegetable or a fruit, and the enzyme concentration in a solution containing the enzyme is 1 to 60 P.E.U. relative to 100 parts by weight of the food material.
(9) The method of (7) or (8) above, wherein the solution containing the enzyme further contains a 0.1% to 5% divalent cationic salt.
(10) The method of (9) above, wherein the divalent cationic salt is a calcium salt.
(11) The method of (1) above, wherein the enzyme is pectinase, the food material is a vegetable or a fruit, and the enzyme concentration in a solution containing the enzyme is 0.1 to 4000 units relative to 100 parts by weight of the food material.
(12) A food material, which is obtained by the method of any one of (1) to (11) above.
(13) A method for producing potato for fried potato, which comprises contacting a solution containing pectinesterase with potato, infiltrating the enzyme into the potato by pressure treatment at 1.04-50 atm, and carrying out the enzyme reaction inside the potato.
(14) A fried potato, which is obtained by frying the potato obtained by the method of (13) above with oil.
(15) A method for modifying a food material, which comprises contacting a solution containing 1 or more types of substances with a molecular weight of 1000 or less with a food material, infiltrating the substance(s) into the food material by pressure treatment at 1.04-50 atm, and introducing the substance(s) into the food material.

The method for modifying a food material of the present invention comprises contacting a solution containing an enzyme with a food material, infiltrating the enzyme into the food material by pressure treatment, and carrying out the enzyme reaction inside the food material, thereby modifying the food material.

A food material used in the present invention means a material used for producing foods. Any food materials can be used in the present invention. Preferred examples of such food materials include meat, fish and shellfish, cereals, vegetables, and fruits. Examples of meat include beef, pork, and chicken meat. Examples of cereals include rice, soybean (green soybean), adzuki bean, and corn. Examples of vegetables include root vegetables such as potato, carrot, onion, radish, and sweet potato, fruit vegetables such as pumpkin and bell pepper, leaf vegetables such as spinach, cabbage, and Chinese cabbage, and leaf and stem vegetables such as asparagus, broccoli, cauliflower, and bamboo shoot. Examples of fruits include strawberry, peach, mango, papaya, watermelon, melon, apple, persimmon, pear, and pineapple.

Food materials used herein may be cut into pieces of any size and shape or may be peeled in view of treatment efficiency or intended purpose of food materials.

An enzyme used in the present invention is not specifically limited, as long as it can react on a protein, a carbohydrate, a lipid, or other components contained in a food material. Examples of such an enzyme include protease, transglutaminase, lipase, glutaminase, amylase, glucanase, xylanase, laccase, phospholipase, pectinase, pectinesterase, and peptidase. Enzymes that can be used in the present invention are not limited to purified enzymes. When an enzyme is extracted from a plant or the like, such extract can be used. Alternatively, when an enzyme is obtained from a microorganism, the culture broth can also be used. In addition, those produced by genetic engineering techniques can be used.

To carry out the method for modifying a food material of the present invention, combinations of a food material and an enzyme are not specifically limited. It is preferred to select an enzyme in accordance with food material components. For example, when the hardness of a pectin-rich food material, such as a vegetable or a fruit, is modified, pectinesterase (also referred to as pectin methylesterase) is preferably used as an enzyme. Pectinesterase is an enzyme that hydrolyzes the ester linkage of the methylester residue of pectin (poly α-D-galacturonic acid) to give methanol and pectic acid. Pectinesterase is known to exist in plants such as white clover, alfalfa, tobacco, tomatoes, and grapefruits, and microorganisms such as *Coniophera cerebclla, Aspergillus, Penicillium, Erwinia*, and *Xanthomonas campestris*. Pectinesterase that can be used in the present invention may be derived from plants or microorganisms or may be produced by gene recombination. Examples of pectinesterase include pectinesterase (produced by Sigma Chemical Co.,) derived from orange peels, Rapidase (produced by DSM Food Specialities) marketed as an enzyme for producing jam in Europe and the U.S.A., and NovoShape (produced by Novozymes A/S) derived from *Aspergillus aculeatus*.

In addition to these enzymes, enzymes such as transglutaminase and protease are preferred for modification of the quality of meat, and enzymes such as glucanase, xylanase, and amylase are preferred for modification of cereals and the like.

An enzyme and a food material used in the present method are preferably used in, for example, the following combinations. It is preferred to combine an enzyme such as protease, transglutaminase, peptidase, or glutaminase with a protein-rich food material such as meat (e.g., beef, pork, or chicken meat), fish and shellfish, green soybean (soybean), or wheat. It is preferred to combine an enzyme such as amylase, glucanase, xylanase, pectinase, pectinesterase, or laccase with a carbohydrate (e.g., starch, pectin, cellulose, or xylose)-rich food material such as root and tuber crops including potato, sweet potato, and the like, root vegetables including radish, carrot, and the like, fruit vegetables including pumpkin, bell pepper, and the like, leaf and stem vegetables including spinach, onion, cabbage, asparagus, broccoli, cauliflower, bamboo shoot, and the like, pulse crops including green soybean (soybean) and the like, fruits (edible fruits) including strawberry, peach, mango, papaya, watermelon, melon, apple, pear, persimmon, pineapple, and the like, and other cereals including rice, corn, and the like. Lipase or phospholipase is preferably combined with a food material containing fats and oils (e.g., triglyceride and phospholipid), such as meat or soybean.

A solvent for a solution containing an enzyme is not specifically limited, as long as the enzyme is not denatured or inactivated and is food grade. An example of such a solvent is water. When water is used as a solvent, the pH is preferably 3-10. Furthermore, a medium containing an enzyme is not limited to a liquid such as a solvent and media such as gases or solids can be used.

The amount of an enzyme in a solution containing the enzyme can be appropriately determined considering the characteristics of a food material to be modified and the degree of modification. For example, when a food material such as a vegetable or a fruit is modified using pectinesterase, the concentration of an enzyme is 0.0005% to 0.03% by weight (converted in terms of the protein amount of the enzyme) relative to a food material (e.g., a vegetable or a fruit) or preferably 1 to 60 P.E.U. (1 P.E.U. refers to the titer of an enzyme that produces 1 mmol of acid for 1 minute) relative to 100 parts by weight of a food material (e.g., a vegetable or a fruit), and more preferably 0.005% to 0.02% by weight or 10 to 40 P.E.U. When a food material such as a vegetable or a fruit is modified using pectinase, the enzyme concentration in the pectinase solution is preferably 0.1 to 4000 units and more preferably 2 to 40 units relative to 100 parts by weight of the food material.

Moreover, when a food material such as a vegetable or a fruit is modified using pectinesterase, it is preferable to further add a divalent cationic salt to a solution containing the enzyme. Through the addition of divalent cations, ionic linkages are formed via the divalent cations between carboxyl groups generated as a result of the hydrolytic reaction of pectinesterase, whereby viscosity of pectinis increased. As a result, the hardness of the vegetable, the fruit, or the like is increased, so that a vegetable or a fruit having improved hardness that does not lose its shape or disintegrate during boiling can be obtained. Examples of a divalent cationic salt include magnesium salts, calcium salts, and barium salts.

The magnesium salt used is not specifically limited, as long as it can be used in foods. Examples of such a magnesium salt include magnesium carbonate, magnesium oxide, magnesium chloride, and magnesium sulfate. Furthermore, the calcium salt used is not specifically limited as long as it can be used in foods. Examples of such a calcium salt include calcium chloride, calcium sulfate, tricalcium phosphate, calcium monohydrogenphosphate, calcium dihydrogenphosphate, calcium glycerophosphate, calcium gluconate, calcium 1-glutamate, calcium lactate, calcium pantothenate, calcium hydroxide, calcium pyrophosphate, calcium citrate, calcium dihydrogenpyrophosphate, calcium oxide, calcium carbonate, and calcinated calcium. Among these, calcium chloride, calcium lactate, and magnesium chloride are preferred.

The concentrations of these divalent cationic salts in solutions differ depending on the type, shape, and treatment conditions of a vegetable or a fruit, and are generally 0.1-5% by weight and preferably 0.2-1% by weight. When the concentration of a divalent cation is too high, bitterness may be generated in a vegetable or a fruit.

Methods for contacting a solution containing an enzyme with a food material include, for example, immersion of a food material in a solution containing an enzyme or spray of a solution containing an enzyme on the surface of a food material.

A solution containing an enzyme is contacted with a food material, and then pressure treatment is carried out for the enzyme to reach the inside of the food material. The pressure for pressure treatment is generally 1.04-50 atm (0.104-5 MPa), preferably 1.5-50 atm (0.15-5 MPa), more preferably 2-15 atm (0.2-1.5 MPa), and most preferably 3-10 atm (0.3-1 MPa). Methods for pressure treatment include, for example, pressurizing an enzyme solution containing a food material immersed therein by a hydraulic pressure pump, compressed air, or gas in a high-pressure cylinder (e.g., helium, argon, and nitrogen), and pressurizing a food material, which is sprayed with an enzyme solution, by compressed air or gas in a high-pressure cylinder (e.g., helium, argon, and nitrogen). The time for pressure treatment can be appropriately varied considering, for example, the characteristics of a food material or ease of the infiltration of an enzyme into a food material, and it is generally about 1-30 minutes. The infiltration can be controlled by controlling the time even on the second time scale at, for example, 0.1-60 seconds. Furthermore, the temperature for pressure treatment is not specifically limited, as long as an enzyme is not inactivated and can be appropriately adjusted.

When pressure treatment is completed, the food material may be left immersed in the enzyme solution for an appropriate time, or an incubation time may be provided with appropriately controlling temperature (preferably 30°C to 50°C) so as to carry out an enzyme reaction more sufficiently.

Moreover, an enzyme solution can be utilized (recycled) repeatedly. For example, vegetables or fruits are put into a container such as a net or a sieve, and the container is immersed in an enzyme solution followed by pressurizing it to carry out enzyme treatment, and then the container containing the vegetables or the fruits are taken away. This enzyme solution may be used again as it is for the next enzyme treatment for vegetables or fruits contained in a net or sieve, which is immersed in the solution and then pressurized.

A food material obtained by the method of the present invention can be preferably used as a cooking material. For example, potato which is processed by the present method using pectinesterase is preferred as raw materials for fried potato. Fried potato obtained from the potato produced by the present method have excellent texture, and their initial crispness last even if time passes from the frying.

As described above, the present invention provides a method for modifying a food material, which comprises contacting a solution containing an enzyme with a food material and carrying out pressure treatment at 1.04-50 atm for the enzyme to infiltrate into the food material. Moreover, according to the present invention, a solution containing 1 or more types of substances with a molecular weight of 1000 or less can also be used instead of a solution containing an enzyme. In this case, conditions (such as pressure applied, temperature, time) are same as those in a case where a solution containing an enzyme is used.

Examples of the above "substances with a molecular weight of 1000 or less" include, but not limited to, substances that can improve the hardness or the texture of a food material and substances for adding nutrition components and flavor such as *umami* (delicious taste) or *kokumi* (mouthfulness, continuity, thickness, mildness or punch), sweetness, bitterness, sourness, or salty taste to a food material. Specific examples of such substances include amino acids or salts thereof such as glutamic acid and aspartic acid, peptides such as isoleucyl·prolyl·proline (IPP), vanillyl·prolyl·proline (VPP), and aspartame, sugars such as glucose, lactose, sucrose, and trehalose, organic acids or salts thereof such as citric acid, acetic acid, and succinic acid, and furthermore, inorganic salts such as sodium chloride, potassium chloride, calcium chloride, and magnesium chloride.

This specification includes part or all of the contents as disclosed in the specifications and/or drawings of Japanese Patent Application Nos. 2002-199025 and 2003-155209, which are priority documents of the present application.

### BRIEF DESCRIPTION OF THE DRAWINGS

Fig. 1 shows experimental results of Example 1 (pumpkins).
Fig. 2 shows experimental results of Example 1 (carrots).
Fig. 3 shows experimental results of Example 1 (potatoes).
Fig. 4 shows experimental results of Example 2 (pumpkins).
Fig. 5 shows experimental results of Example 2 (carrots).
Fig. 6 shows experimental results of Example 3.
Fig. 7 shows experimental results of Example 4.
Fig. 8 shows experimental results of Example 4.
Fig. 9 shows experimental results of Example 5 (strawberries).
Fig. 10 shows experimental results of Example 5 (mangos).
Fig. 11 shows experimental results of Example 6 (persimmons).
Fig. 12 shows experimental results of Example 6 (papayas).
Fig. 13 shows experimental results of Example 6 (mangos).
Fig. 14 shows experimental results of Example 7 (carrots).
Fig. 15 shows experimental results of Example 7 (potatoes).
Fig. 16 shows experimental results of Example 8.
Fig. 17 shows experimental results of Example 9.

### BEST MODE OF CARRYING OUT THE INVENTION

The present invention will be hereafter described in detail by referring to examples, but the invention is not limited by these examples.

### Example 1 Modification (hardening treatment) of pumpkins, potatoes, and carrots

0.01% pectinesterase (NovoShape, converted in terms of protein amount) relative to the weight of vegetables was added to each 0.28% calcium chloride aqueous solution (two-fold weight relative to vegetables). Pumpkins, potatoes, and carrots were cut into pieces in the shape of a 1.5 cm dice, and then immersed in the solutions. The aqueous solutions were subjected to pressure treatment carried out at 50 atm for 20 minutes or 5 atm for 5 minutes using a helium gas cylinder. After pressure treatment, the vegetables were kept at 40°C for 1 hour, removed from the solutions, and then boiled in a boiling pan for 15 minutes, thereby preparing samples for measuring physical properties. The physical properties of the obtained samples were measured using a texture analyzer (produced by Stable Micro Systems Ltd.), and then load-bearing characteristic (hardness) was evaluated using penetration of a 5 mm-spherical plunger.

Furthermore, as comparative examples, load-bearing characteristic was similarly measured using samples obtained in a manner similar to that described above except for not adding pectinesterase, samples obtained in a manner similar to that described above except for not adding calcium, and control samples prepared by simply boiling the raw vegetables intact for 15 minutes.

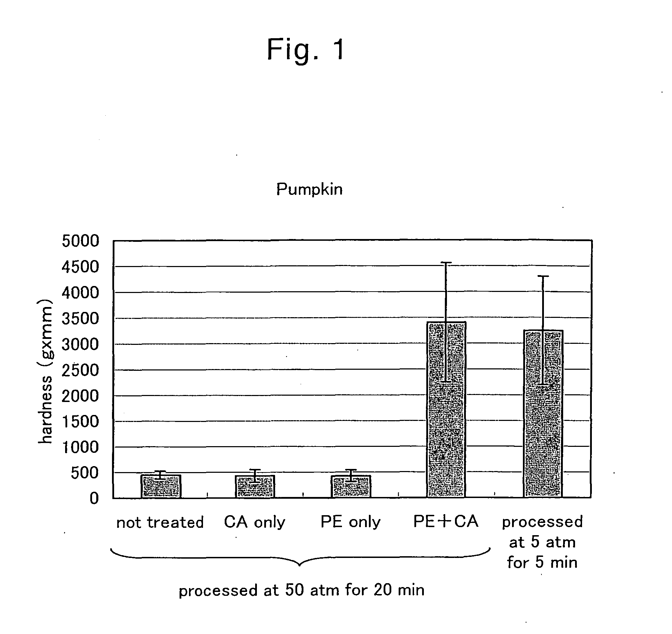

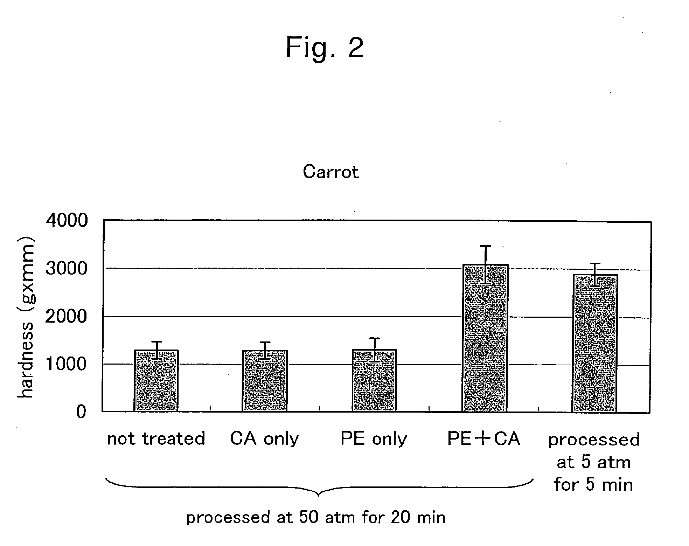

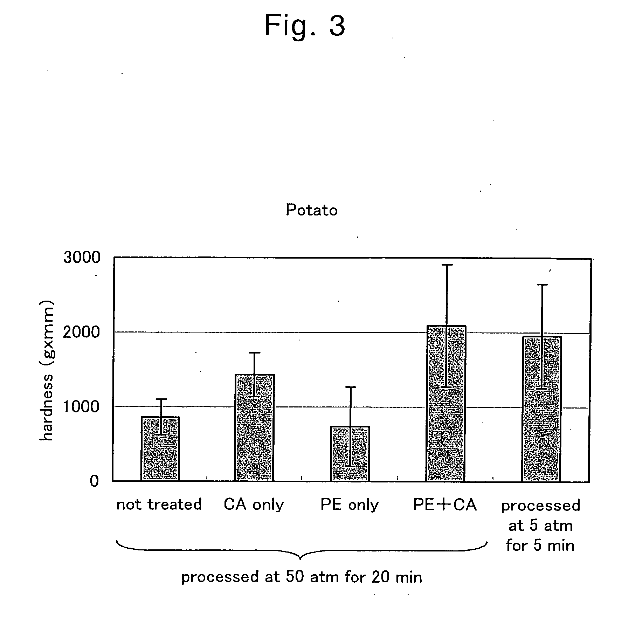

The results are shown in Figs. 1 to 3.

The results in Figs. 1 to 3 showed that the hardness of all the vegetables including pumpkins, potatoes, and carrots increased when the vegetables were subjected to pressure treatment in the presence of pectinesterase (PE) and calcium chloride (CA). It was also shown that even when pressure treatment was carried out at 5 atm for 5 minutes in the presence of pectinesterase and calcium chloride, the hardness of the vegetables was increased to the same degree as that in the case of 20 minutes of pressure treatment at 50 atm.

### Example 2 Modification of vegetables by recycling of enzyme solution

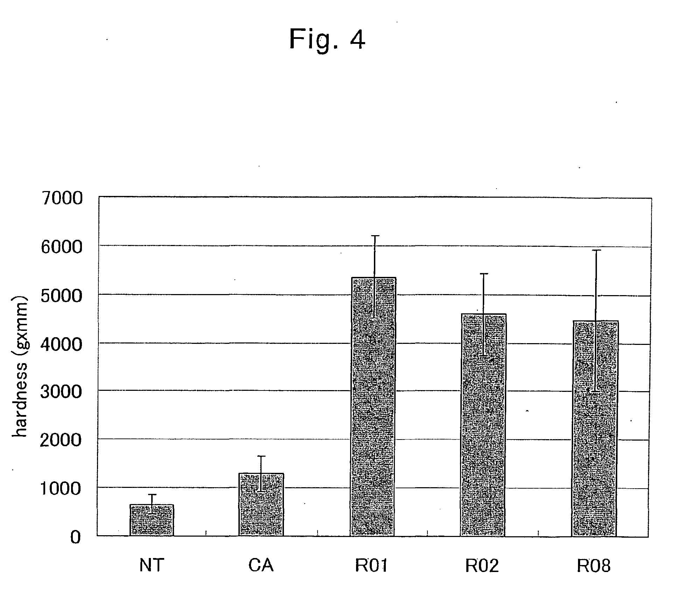

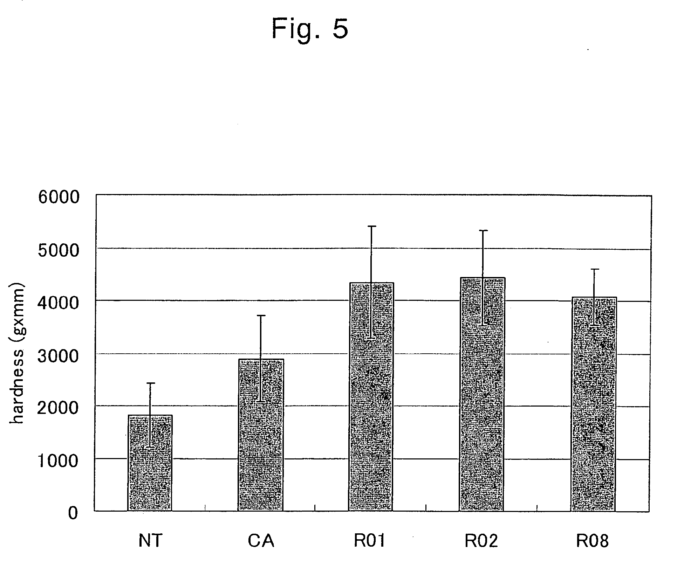

0.01% pectinesterase (NovoShape, converted in terms of protein amount) relative to the weight of vegetables was added to each 200 parts by weight of 0.28% calcium chloride aqueous solution. 100 parts by weight of vegetables (pumpkins or carrots) cut into pieces in the shape of a 1.5 cm dice and put into nets were immersed to the enzyme solutions, and then pressure treatment was carried out at 5 atm for 5 minutes using a hydraulic pump. Subsequently, the vegetables in the nets were replaced with untreated vegetables, and then pressure treatment was similarly carried out at 5 atm for 5 minutes using the same enzyme solution repeatedly and a hydraulic pump. This procedure was repeated up to 12 times. The treated vegetables obtained by each of the first immersion and pressure treatment to the eighth (R01 to R08) immersion and pressure treatment were kept in the aqueous solutions at 40°C for 1 hour, and then boiled in a boiling pan for 15 minutes, thereby preparing samples for measuring physical properties (R01 to R08). The physical properties of the obtained samples were measured using a texture analyzer (produced by Stable Micro Systems Ltd.), and then load-bearing characteristic (hardness) was evaluated using penetration of a 5-mm plunger. As comparative examples, load-bearing characteristic was similarly measured for samples (CA) treated in a manner similar to that described above except for not using an enzyme and samples (NT) prepared by simply boiling raw vegetables intact for 15 minutes. The results are shown in Figs. 4 and 5. The results in Figs. 4 and 5 showed that an enzyme solution can be recycled because even vegetables treated in the repeatedly-used enzyme solution were more significantly hardened compared with the vegetables (CA) treated only with the calcium chloride solution and the vegetables (NT) prepared by boiling the raw vegetables for 15 minutes.

### Example 3 Modification (softening treatment) of vegetables using pectinase solution

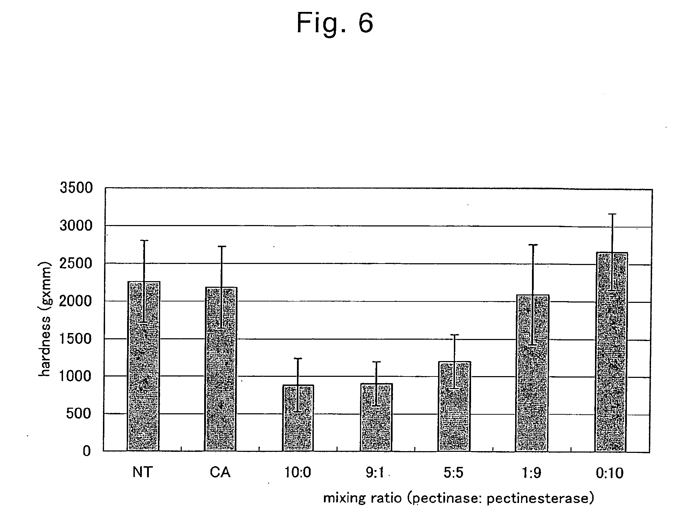

2 parts by weight of a mixed solution containing pectinesterase (Novoshape) and pectinase (Novozymes A/S, Pectinex Ultra SP-L) was added to each 200 parts by weight of 0.28% calcium chloride aqueous solution. 100 parts by weight of vegetables (carrots) cut into pieces in the shape of a 1.5 cm dice were immersed in the enzyme solutions, and then pressure treatment was carried out at 5 atm for 5 minutes using a helium cylinder. After pressure treatment, the treated vegetables were kept at 40°C for 1 hour in the aqueous solutions, and then boiled in a boiling pan for 15 minutes, thereby preparing samples for measuring physical properties. The physical properties of the obtained samples were measured using a texture analyzer (produced by Stable Micro Systems Ltd.), and then load-bearing characteristic (hardness) was evaluated using penetration of a 5-mm plunger. As comparative examples, load-bearing characteristic was similarly measured for samples (CA) treated in a manner similar to that described above except for not using an enzyme and samples (NT) prepared by simply boiling the raw vegetables intact for 15 minutes. The results are shown in Fig. 6. The results in Fig. 6 showed that carrots treated with an enzyme solution containing pectinase at a higher ratio was softened to a greater extent than the vegetables (CA) treated only with the calcium chloride solution and the vegetables (NT) prepared by boiling the raw vegetables for 15 minutes. As described above, it is possible to provide a softer texture by causing enzymes to react in combination.

### Example 4 Improvement in texture of fried potatoes by modification of potatoes

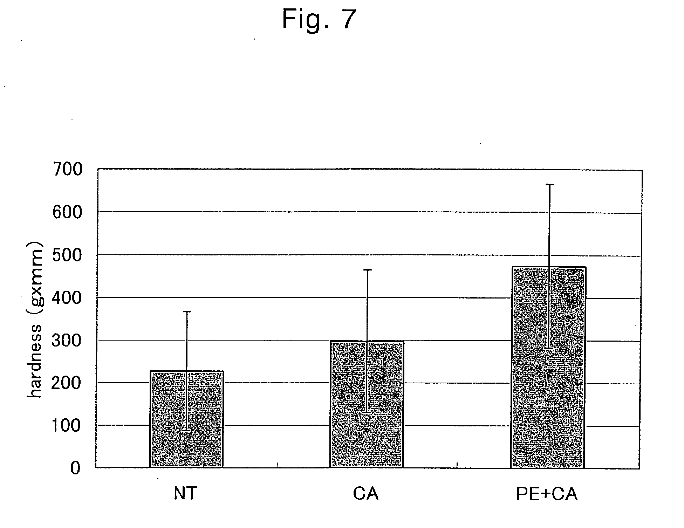

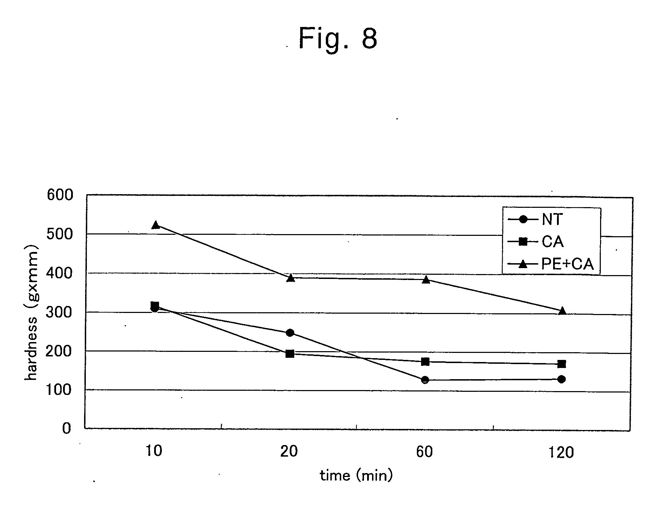

0.003% pectinesterase (NovoShape, converted in terms of protein amount) relative to the weight of potatoes was added to each 100 to 200 parts by weight of 1% calcium chloride aqueous solution. Potatoes (100 parts by weight) cut into pieces in the shape of a 7 mm stick (produced in Hokkaido, Hokkaikogane) were immersed in the enzyme solutions, and then pressure treatment was carried out at 5 atm for 5 minutes using a hydraulic pump. After pressure treatment, the potatoes were immersed in hot water at 70°C for 10 minutes, and then drained off with a strainer. Next the potatoes were pre-fried in oil at 190°C for 1 minute, cooled at -40°C for 1 hour, and then stored at -18°C for 1 week. The frozen pre-fried potatoes were fried in oil at 170°C for 3 minutes, thereby preparing samples (PE+CA) for evaluating texture and for measuring physical properties. Texture was evaluated by a sensory test wherein 10 blindfolded panels were asked to select samples with higher crispness. The physical properties of the samples were measured using a texture analyzer (produced by Stable Micro Systems Ltd.), and then load-bearing characteristic (hardness) was measured upon bending of the fried potatoes with a triangle plunger. Measurement was carried out immediately following frying or after the passage of a certain time following frying. As comparative examples, texture evaluation and measurement of load-bearing characteristic was similarly carried out for samples (CA) obtained in a manner similar to that described above except for not using pectinesterase and samples (NT) obtained in a manner similar to that described above except for not using both pectinesterase and calcium chloride. When texture evaluation was carried out for these samples, all 10 panels evaluated that the enzyme-treated samples had more crispness. In addition, the results of measuring physical properties are shown in Figs. 7 and 8. Fig. 7 shows the results of measuring the hardness of the fried potatoes 20 minutes after the time immediately following frying. In the case of not treated sample (NT), the load-bearing strength of the fried potatoes was weak and thus the fried potatoes were too soft. However, the fried potatoes (PE+CA) treated with the enzyme maintained sufficient load-bearing strength. Fig. 8 shows changes with time in load- bearing strength (hardness). The fried potatoes (PE+CA) treated with the enzyme had significantly high load- bearing strength even after a certain time had passed compared with that of the fried potatoes (CA) and (NT). The fried potatoes (PE+CA) maintained crispness for a long time period, equivalent to that at the time immediately following frying.

### Example 5 Modification (hardening treatment) of strawberries and mangos

0.01% by weight of pectinesterase (NovoShape, converted in terms of protein amount) relative to the weight of fruits was added to each 0.28% calcium chloride aqueous solution (two-fold weight relative to fruits). Intact strawberries were immersed and mangos cut into pieces in the shape of a 1.5 cm dice were immersed in the solutions, and then pressure treatment was carried out at 5 atm for 5 minutes. In addition, pressure treatment was carried out by the method similar to that in Example 1. After pressure treatment, the fruits were kept in the aqueous solutions for 1 hour, removed from the solutions, and then stored in a refrigerator for 1 week, thereby preparing samples.

Furthermore, as comparative examples, samples obtained in a manner similar to that described above except for not adding pectinesterase, samples obtained in a manner similar to that described above except for not adding calcium, and samples obtained by simply storing the raw fruits intact for 1 week as control samples were prepared.

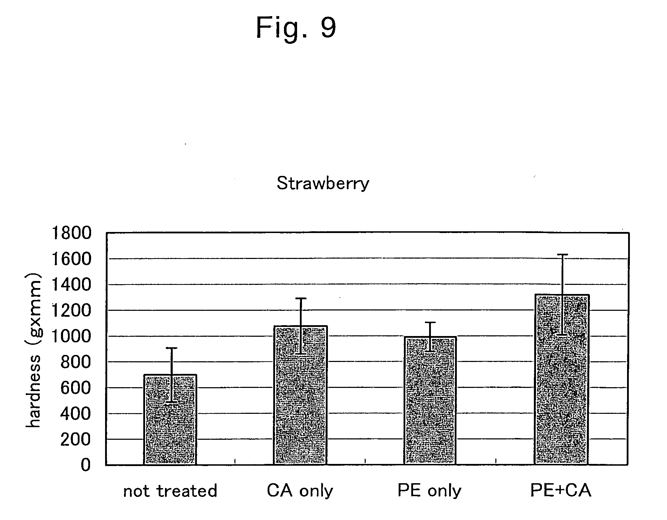

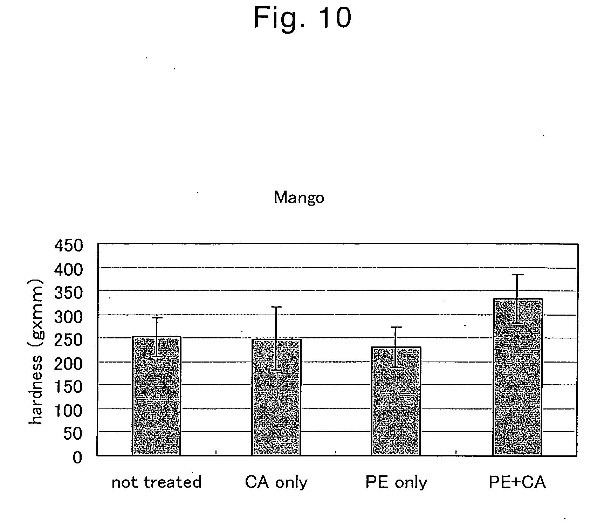

The load-bearing characteristic of these samples was measured in a manner similar to that of Example 1. The results are shown in Figs. 9 and 10. The results in Figs. 9 and 10 showed that in both strawberries and mangos, the hardness of the fruits was increased when pressure treatment had been carried out in the presence of pectinesterase (PE) and calcium chloride (CA).

### Example 6 Modification (hardening treatment) of persimmons, papayas, and mangos

0.01% by weight of pectinesterase (NovoShape, converted in terms of protein amount) relative to the weight of fruits was added to each 0.28% calcium chloride aqueous solution (two-fold weight relative to fruits). Fruits (persimmons, papayas, or mangos) cut into pieces in the shape of a 1 cm dice were immersed in the solutions, and then pressure treatment was carried out at 5 atm for 5 minutes. Pressure treatment was carried out using a hydraulic pump similarly to that used in Example 2. After pressure treatment, the fruits were kept in the aqueous solutions at 40°C for 1 hour. Parts of them were then removed from the solutions, and then load-bearing characteristic (hardness) was measured (not-boiled samples). The remaining fruits were boiled for 10 minutes, and then cooled, followed by measurement of load-bearing characteristic (hardness) (boiled samples). Subsequently, some of the boiled fruits were refrigerated at 4°C for 1 week (chilled samples), and then the remaining boiled fruits were frozen at -18°C for 1 week (frozen samples). Each stored sample was allowed to return to a normal temperature, and then load-bearing strength (hardness) was measured.

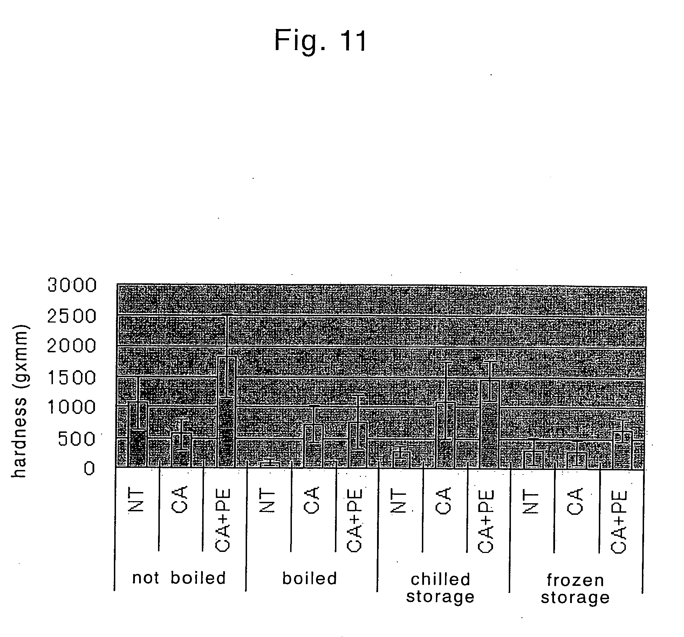

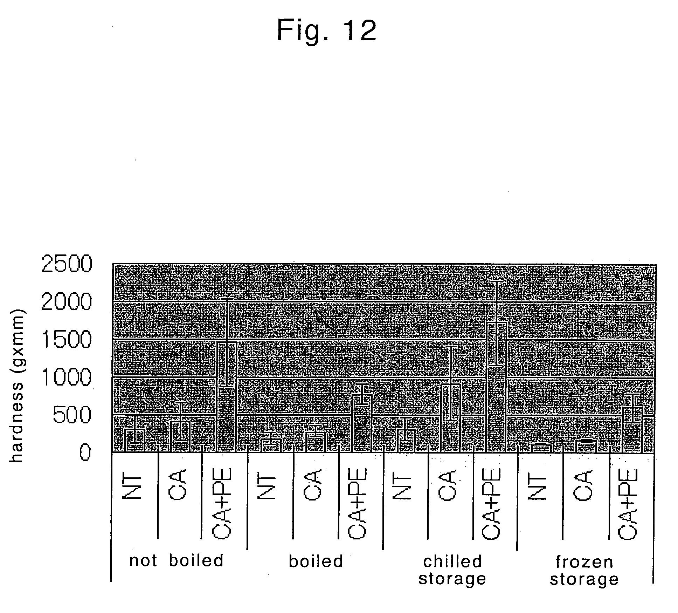

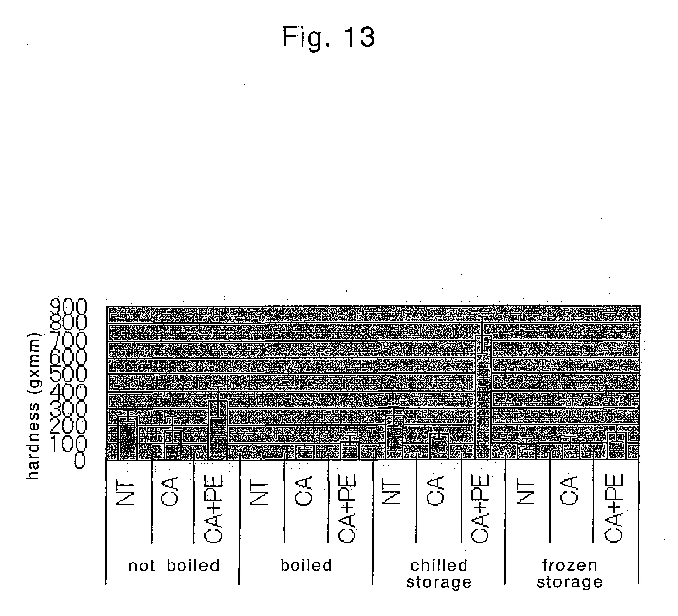

Furthermore, as comparative examples, load-bearing characteristic of samples (CA) obtained in a manner similar to that described above except for not using pectinesterase and that of samples (NT) obtained in a manner similar to that described above except for not using pectinesterase and calcium chloride were measured. The results of measuring the load-bearing characteristic of these samples are shown in Fig. 11 (persimmons), Fig. 12 (papayas), and Fig. 13 (mangos). In all the cases of the not-boiled samples, the boiled samples, the chilled samples, and the frozen samples, it was shown that those treated with the enzyme solution containing pectinesterase (CA+PE) tended to have more hardness than that of (NT) and (CA) samples.

### Example 7 Modification (hardening treatment) of vegetables by spraying with enzyme solution

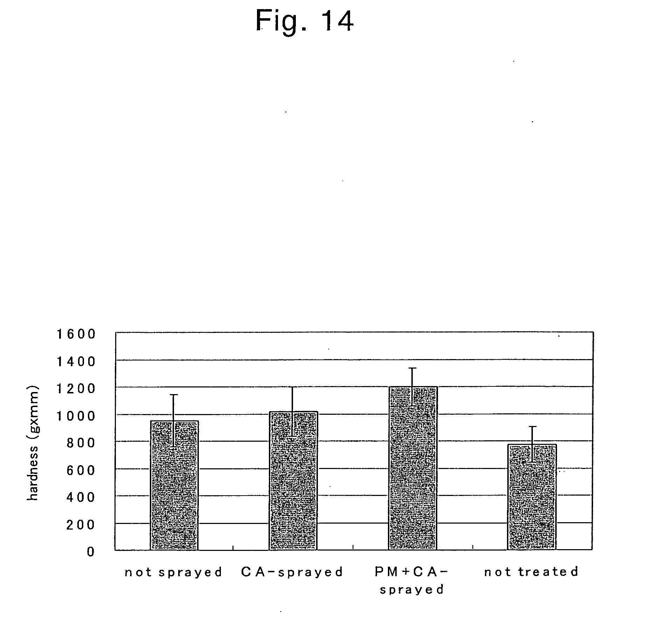

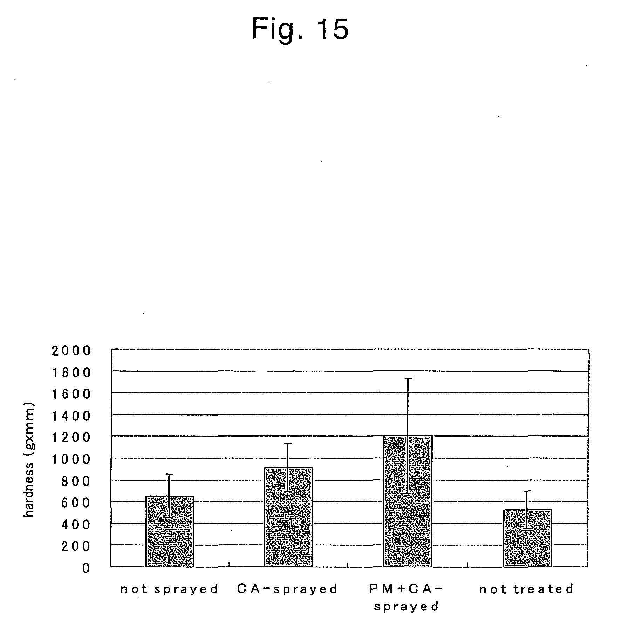

0.003% by weight of pectinesterase (converted in terms of protein amount) was added to each 1% calcium chloride aqueous solution. The aqueous solutions were sprayed over the surfaces of carrots or potatoes cut into pieces in the shape of a 1.5 cm dice so as to moisten the surfaces of the vegetables. Subsequently, pressure treatment was carried out at 5 atm for 5 minutes in a method similar to that in Example 1 using helium gas. After pressure treatment, the vegetables were kept in the aqueous solutions at 40°C for 1 hour, and then boiled in a boiling pan for 15 minutes, thereby preparing samples for measuring physical properties (PE+CA-sprayed). The physical properties of the obtained samples were measured using a texture analyzer (produced by Stable Micro Systems Ltd.), and then load-bearing characteristic (hardness) was evaluated using penetration of a 5-mm plunger. As comparative examples, samples (CA-sprayed) treated in a manner similar to that described above except for not using an enzyme, samples (not sprayed) treated in a manner similar to that described above but without spraying, and samples (not treated) prepared by simply boiling the raw vegetables for 15 minutes were prepared, and then load-bearing characteristic was measured for these samples. The results are shown in Fig. 14 (carrots) and Fig. 15 (potatoes).

It was observed that the samples treated with the enzyme solution containing pectinestrase were significantly hardened compared with the non-treated samples.

### Example 8 Modification of carrots by short-time pressure processing

0.01% pectinesterase (NovoShape, converted in terms of protein amount) relative to the weight of vegetables was added to each 200 parts by weight of 1.1% calcium chloride aqueous solution. 100 parts by weight of vegetables (carrots) cut into pieces in the shape of a 1.5 cm dice were immersed in the enzyme solutions, and then pressure was increased to 1.1, 2, or 6 atm within 20 seconds or less using a hydraulic pump. Within 1 second after a pressure reached each predetermined pressure, pressure was released for the pressure to return to a normal pressure within 5 seconds. After pressure processing, the vegetables were kept at 40°C for 1 hour, removed from the solutions, and then boiled in a boiling pan for 15 minutes, thereby preparing samples for measuring physical properties. The physical properties of the obtained samples were measured using a texture analyzer (produced by Stable Micro Systems Ltd.), and then load-bearing characteristic (hardness) was evaluated using penetration of a 5-mm spherical plunger.

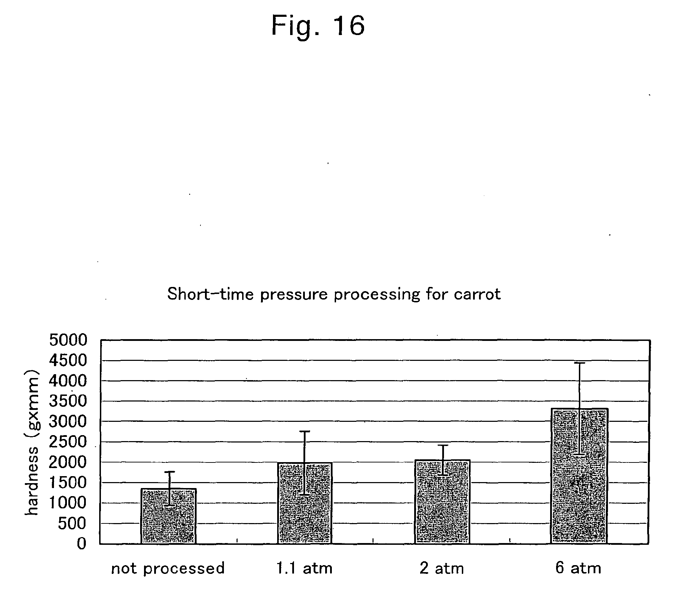

As comparative examples, samples (untreated) prepared by cutting the raw vegetables into pieces and then simply boiling them intact for 15 minutes were used for measuring physical properties. The results are shown in Fig. 16.

The results in Fig. 16 showed that even when the time for applying pressure was very short, the hardness of the vegetables would be higher.

### Example 9 Pressure processing of potatoes under conditions with low pressure

0.01% pectinesterase (NovoShape, converted in terms of protein amount) relative to the weight of vegetables was added to each 200 parts by weight of 5% calcium chloride aqueous solution. 100 parts by weight of vegetables (potato) cut into pieces in the shape of a 1.5 cm dice were added to the enzyme solutions. The vegetables were put at a depth of 40 cm in the solution for 2 hours and the enzyme solution was infiltrated into the vegetables. Pressure to be applied to the vegetables at this time would be 1.04 atm in total, made up of an atmospheric pressure (1 atm) and water pressure of 0.04 atm. After pressure treatment, the vegetables were kept at 40°C for 1 hour, removed from the solution, and then boiled in a boiling pan for 15 minutes, thereby preparing samples for measuring physical properties. The physical properties of the obtained samples were measured using a texture analyzer (produced by Stable Micro Systems Ltd.), and then load-bearing characteristic (hardness) was evaluated using penetration of a 5-mm spherical plunger.

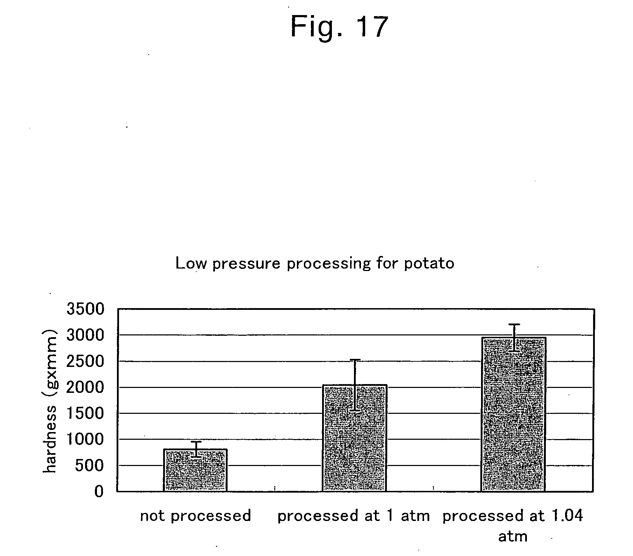

As comparative examples, samples (untreated) prepared by cutting the raw vegetables into pieces and then simply boiling them for 15 minutes and samples (treated at 1 atm) prepared by putting the cut vegetables in enzyme solution prepared in a manner similar to that described above, putting them at a depth of 2 cm in the solution for 2 hours, keeping them at 40°C for 1 hour, and then boiling them in a boiling pan for 15 minutes were used. The results are shown in Fig. 17.

The results in Fig. 17 showed that even with a slight difference in pressure upon pressure treatment between the samples treated at 1 atm and the samples treated at 1.04 atm, the effect of modifying vegetables was significant in the samples treated at 1.04 atm.

All publications, patents, and patent applications cited herein are incorporated herein by reference in their entirety.

### Industrial Applicability

According to the present invention, a food material having improved *umami* or *kokumi* (mouthfulness, continuity, thickness, mildness or punch), and excellent appearance and texture, and a method for modifying a food material to produce such a food material, can be provided. Furthermore, according to the method for modifying a food material of the present invention, hardness of a food material such as a vegetable or a fruit can be increased; that is, the food material can be hardened. By hardening a food material, softening and disintegration during boiling can be prevented while heating a vegetable or a fruit. Furthermore, loss of the shape of a food material during storage or due to shock during transport can be prevented. Moreover, this can also reduce softening of a food material, which is caused by freezing.

In addition, according to the method for modifying a food material of the present invention, hardness of a food material such as a vegetable or a fruit can be decreased; that is, the food material can be softened. A food material softened by the method of the present invention can be easily chewed and swallowed. For example, such a food material is appropriate for the diet of patients with weakened maxillary force, old persons, infants who do not yet have a full set of teeth, and the like.

## Claims

1. A method for modifying a food material, which comprises:
contacting a solution containing an enzyme with a food material,
infiltrating the enzyme into the food material by pressure treatment at 1.04-50 atm, and
carrying out the enzyme reaction inside the food material.

2. The method of claim 1, wherein the food material is selected from the group consisting of meat, fish and shellfish, cereals, vegetables, and fruits.

3. The method of claim 1, wherein the enzyme is selected from the group consisting of protease, transglutaminase, lipase, glutaminase, amylase, glucanase, xylanase, laccase, phospholipase, pectinase, pectinesterase, and peptidase.

4. The method of claim 1, wherein the pressure of the pressure treatment is 2-15 atm.

5. The method of claim 1, wherein the food material is selected from the group consisting of potato, carrot, onion, radish, pumpkin, bell pepper, spinach, cabbage, sweet potato, asparagus, broccoli, cauliflower, bamboo shoot, and green soybean.

6. The method of claim 1, wherein the food material is selected from the group consisting of strawberry, peach, mango, papaya, watermelon, melon, apple, pear, persimmon, and pineapple.

7. The method of claim 1, wherein the enzyme is pectinesterase, the food material is a vegetable or a fruit, and the enzyme concentration as the protein amount of the enzyme in a solution containing the enzyme is 0.0005% to 0.03% by weight relative to the food material .

8. The method of claim 1, wherein the enzyme is pectinesterase, the food material is a vegetable or a fruit, and the enzyme concentration in a solution containing the enzyme is 1 to 60 P.E.U. relative to 100 parts by weight of the food material.

9. The method of claim 7 or 8, wherein the solution containing the enzyme further contains a 0.1 % to 5% divalent cationic salt.

10. The method of claim 9, wherein the divalent cationic salt is a calcium salt.

11. The method of claim 1, wherein the enzyme is pectinase, the food material is a vegetable or a fruit, and the enzyme concentration in a solution containing the enzyme is 0.1 to 4000 units relative to 100 parts by weight of the food material.

12. A food material, which is obtained by the method of any one of claims 1 to 11.

13. A method for producing potato for fried potato, which comprises contacting a solution containing pectinesterase with potato, infiltrating the enzyme into the potato by pressure treatment at 1.04-50 atm, and carrying out the enzyme reaction inside the potato.

14. A fried potato, which is obtained by frying the potato obtained by the method of claim 13 with oil.

15. A method for modifying a food material, which comprises contacting a solution containing 1 or more types of substances with a molecular weight of 1000 or less with a food material, infiltrating the substance(s) into the food material by pressure treatment at 1.04-50 atm, and introducing the substance(s) into the food material.
